Europäisches Patentamt

European Patent Office

Office européen des brevets

(11) Veröffentlichungsnummer: **0 181 958**
**A1**

(12) **EUROPÄISCHE PATENTANMELDUNG**

(21) Anmeldenummer: **84114039.5**

(22) Anmeldetag: **20.11.84**

(51) Int. Cl.⁴: **B 23 H 9/00**

(43) Veröffentlichungstag der Anmeldung: **28.05.86**
**Patentblatt 86/22**

(84) Benannte Vertragsstaaten: **AT BE CH DE FR GB IT LI LU NL SE**

(71) Anmelder: **Firma Karl-Heinz Schnieder, Bünder Strasse 103, D-4900 Herford (DE)**

(72) Erfinder: **Schnieder, Frank jun., Enger Strasse 188, D-4900 Herford (DE)**

(74) Vertreter: **Nickels, Heinz, Dipl.-Ing. Dr.-Ing., Detmolder Strasse 26 Postfach 6207, D-4800 Bielefeld 1 (DE)**

(54) Verfahren zur Herstellung einer Spritzgiessform für die Herstellung eines Sitzgeflechtes aus Kunststoff und Herstellungswerkzeug, Spritzgiessform sowie Sitzgeflecht.

(57) Bei dem Verfahren zur Herstellung eines Sitzgeflechtes aus Kunststoff mittels einer Spritzgießform wird eine Elektrode entsprechend dem höhenmäßigen Kurvenverlauf gleichgerichteter Geflechtstränge (1, 2, 3) mit der Strangpositivform, die der späteren Geflechtform des hergestellten Sitzgeflechtes entspricht, versehen und dann werden mit dieser Elektrode in beide Hälften (6, 7) der Spritzgießform durch Funkenerodieren die Geflechtstränge in Negativform eingebracht und in der Spritzgießform das Sitzgeflecht einteilig aus Kunststoff gespritzt.

Das hergestellte Sitzgeflecht hat auf beiden Seiten eine einem natürlichen Geflecht entsprechende Geflechtsausbildung. Die Art des Geflechtes kann verschiedenartig ausgeführt und einteilig mit einem umlaufenden Rand (5) ausgebildet sein.

0181958

" Verfahren zur Herstellung einer Spritzgießform für die Herstellung eines Sitzgeflechtes
aus Kunststoff und Herstellungswerkzeug,
Spritzgießform sowie Sitzgeflecht "

Die Erfindung bezieht sich auf ein Verfahren zur Herstellung einer Spritzgießform für die Herstellung eines Sitzgeflechtes aus Kunststoff und auf das Herstellungswerkzeug, die Spritzgießform sowie das hergestellte Sitzgeflecht.

Die bisher bekannten Sitzgeflechte aus Kunststoff weichen in ihrer Geflechtstruktur sehr stark von einem natürlichen Geflecht ab, so daß dadurch der Charakter eines natürlichen Geflechtes nicht gegeben ist und jedermann dieses sofort als nachgeahmtes Kunststoffgeflecht erkennt.

Dieses liegt daran, daß die trotz mit großem Aufwand teuer hergestellten Spritzgießformen ein Abspritzen des Sitzgeflechtes in naturgetreuer Ausführung nicht ermöglichen; desweiteren unterliegen die bekannten Spritzgießwerkzeuge einen großen Verschleiß, der einerseits noch die Ungenauigkeit im Geflecht begünstigt und andererseits eine ständige Erneuerung erfordert, was sich auch nachteilig auf die Herstellungskosten der Sitzgeflechte auswirkt.

Aufgabe der Erfindung ist es deshalb, ein Verfahren zur Herstellung eines Spritzgießwerkzeuges zu schaffen, mit den in den beiden Formhälften in einfacher Weise eine genaue Negativform erstellt werden kann, die ein Abspritzen eines Sitzgeflechtes in naturgetreuer Geflechtausführung ermöglicht; dabei soll das Spritzgießwerkzeug bei kostengünstiger Herstellung verschleißarm ausgeführt sein und somit eine lange Standzeit bei gleichbleibend genauer Formgebung des herzustellenden Sitzgeflechtes haben.

Für die Herstellung des Spritzgießwerkzeuges ist es weiterhin Aufgabe der Erfindung ein einfach aufgebautes und sicher arbeitendes Herstellungswerkzeug zu schaffen, daß auch bei den unterschiedlichsten Geflechtformen aus sehr wenigen Teilen besteht und für beide Formhälften benutzbar ist.

Schließlich ist es Aufgabe der Erfindung, ein Sitzgeflecht zu schaffen, daß sowohl an seiner Oberseite als auch an seiner Unterseite in den Formen und im Verlauf der einzelnen Geflechtstränge einem natürlichen Geflecht entspricht und somit trotz der Kunststoffausführung von einem Naturgeflecht kaum zu unterscheiden ist.

Die Verfahrensaufgabe wird erfindungsgemäß durch die kennzeichnenden Merkmale des Patentanspruches 1 gelöst, wobei noch die sich daran anschließenden Unteransprüche 2 bis 4 vorteilhafte Weiterbildungen der Aufgabenlösung beinhalten.

Die gegenständlichen Aufgaben bezüglich Herstellungswerkzeug, Spritzgießwerkzeug und hergestelltes Sitzgeflecht sind durch die kennzeichnenden Merkmale der entsprechenden Ansprüche 5 bis 14 gelöst worden.

Die Erfindung erstreckt sich nicht nur auf die Merkmale der einzelnen Ansprüche, sondern auch auf deren Kombination.

- 3 -

Durch die Erfindung sind folgende verfahrenstechnische, technische und formenmäßige Vorteile erzielt worden:

1. Die Herstellung der Negativform in den beiden Hälften des Spritzgießwerkzeuges erfolgt durch Funkenerodieren, was eine äußerst genaue Herausarbeitung der Geflechtform ermöglicht,

2. die Erstellung dieser Negativform wird mittels einer Elektrode vorgenommen, welche als Herstellungswerkzeug die Positivform der Geflechtstränge aufweist, die genau dem höhenmäßigen Kurvenverlauf der Geflechtstränge eines natürlichen Geflechtes an der Elektrode angebracht sind und die eine genaue Formenübertragung auf die Formhälften gewährleisten,

3. es sind für die längs- und querverlaufenden Geflechtstränge eine Elektrode und für die diagonalverlaufenden Geflechtstränge eine zweite Elektrode erforderlich, durch die die verschiedensten Geflechtformen erstellbar sind,

4. für beide Formhälften werden dieselben Elektroden verwendet, so daß dadurch das Herstellungswerkzeug nur aus wenigen (zwei) Teilen besteht,

5. da für beide Formhälften (Ober- und Unterteil) dieselbe Elektrode eingesetzt wird, sind beide Seiten (Negativformen) 1oo%ig genau und gleich,

6. die beiden aus Stahl oder dergleichen bestehenden Formhälften des Spritzgießwerkzeuges können vorher voll durchgehärtet werden und danach erfolgt erst das Herauserodieren der Negativform, wodurch eine hohe Genauigkeit der Negativform und eine sehr lange Standzeit bei dauerhaft gleichbleibender Herstellung des Sitzgeflechtes gegeben ist,

7. durch das Verfahren und die hierfür vorgesehenen Mittel ist eine kostengünstige und genaue Herstellung eines Spritzgießwerkzeuges geschaffen worden,

- 4 -

8. das hergestellte Sitzgeflecht aus Kunststoff zeigt eine naturgetreue Ausführung des Geflechtes auf beiden Seiten und ist von einem Naturgeflecht in der Formgebung nicht zu unterscheiden, wodurch das Sitzgeflecht einen hohen Gebrauchswert hat,

9. weiterhin ist durch das Funkenerodieren eine Riffelung der Oberfläche der Negativform möglich, wodurch auf den Geflechtsträngen des hergestellten Sitzgeflechtes ebenfalls naturgetreue Riffelungen entstehen, die das natürliche Erscheinungsbild noch vervollständigen,

1o. die besondere Herstellung der Spritzgießform (deren Hälften) läßt a n beiden Seiten des hergestellten Sitzgeflechtes die natürlich sich überkreuzenden und durchschlungenen Geflechtstränge in optimaler Ausführung erscheinen.

Anhand der Zeichnungen wird nachfolgend ein Ausführungsbeispiel gemäß der Erfindung näher erläutert. Es zeigen:

Fig. 1     eine Draufsicht auf ein Sitzgeflecht eines Sitzteiles aus Kunststoff mit längs, quer- und diagonalverlaufenden Geflechtsträngen und einem umlaufenden Befestigungsrand,

Fig. 2     einen senkrechten Schnitt durch einen Teilbereich einer aus zwei Hälften bestehenden Spritzgießform mit Negativform der Geflechtstränge,

Fig. 3     eine Draufsicht auf eine Elektrode mit in Positivform vorgesehenen Geflechtsträngen für die längs- und querverlaufenden Geflechtsträngen in den Hälften der Spritzgießform,

Fig. 4     eine Seitenansicht der Elektrode nach Fig. 3,

Fig. 5     eine Draufsicht auf eine Elektrode mit in Positivform vorgesehenen Geflechtsträngen für die diagonalverlaufenden Geflechtstränge in den Hälften der Spritzgießform,

Fig. 6     eine Seitenansicht der Elektrode nach Fig. 5,

Fig. 7     einen Kurvenverlauf in Höhenrichtung eines diagonalen Geflechtsstranges vom höchsten über den niedrigsten zum höchsten Punkt mit zwei dazwischenliegenden Lochmitten des Geflechtes,

Fig. 8     einen Kurvenverlauf eines quer- und längsverlaufenden Geflechtsstranges vom höchsten zum niedrigsten und wieder zum höchsten Punkt mit einer dazwischenliegenden Lochmitte des Geflechtes.

Das erfindungsgemäße Sitzgeflecht aus Kunststoff setzt sich aus mehreren ein- oder mehrfach parallel verlaufenden, in Längs- und Querrichtung und/oder in Diagonalrichtung angeordneten Geflechtsträngen 1,2 und 3 zusammen, die sich in ihren Kreuzungspunkten überlappen und zwischen sich eine Vielzahl an Geflechtlöchern 4 freilassen. Dieses Sitzgeflecht bildet zusammen mit einem umlaufenden Befestigungsrand 5 ein Sitzteil, welches einteilig aus Kunststoff hergestellt ist.

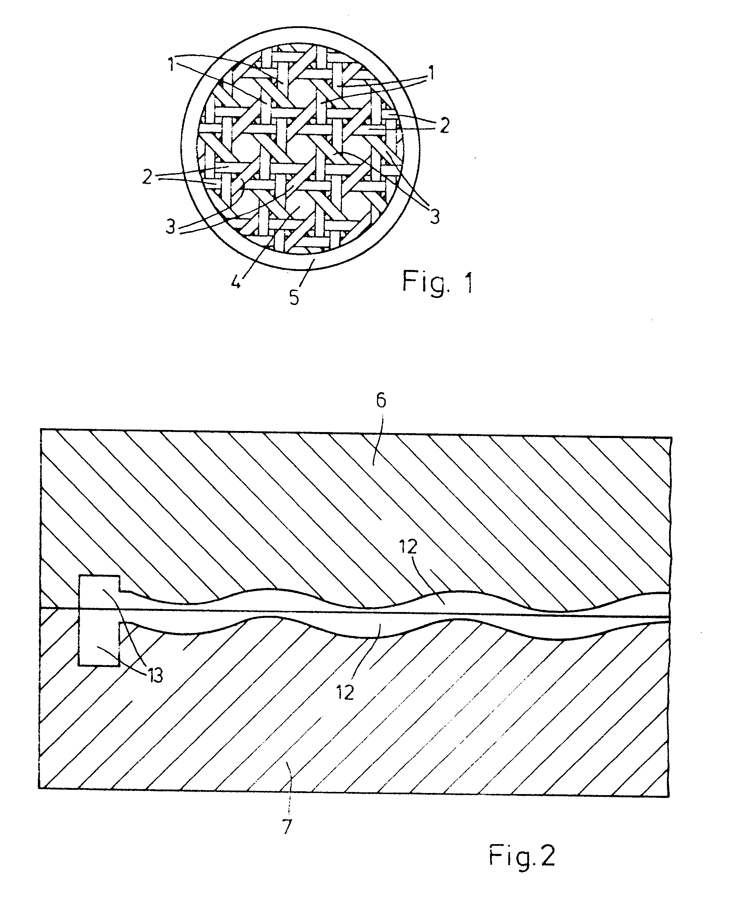

In Fig. 1 ist als Ausführungsbeispiel ein aus jeweils paarweise angeordneten und parallellaufenden, in Längs- und Querrichtung angeordneten Geflechtsträngen 1 und 2 und aus einzelnen, parallellaufenden Diagonal-Geflechtsträngen 3 gebildetes Sitzgeflecht dargestellt. Die Erfindung bezieht sich jedoch nicht nur auf diese dargestellte Geflechtform, sondern auch auf die in verschiedensten anderen Anordnungen möglichen und bekannten Geflechte.

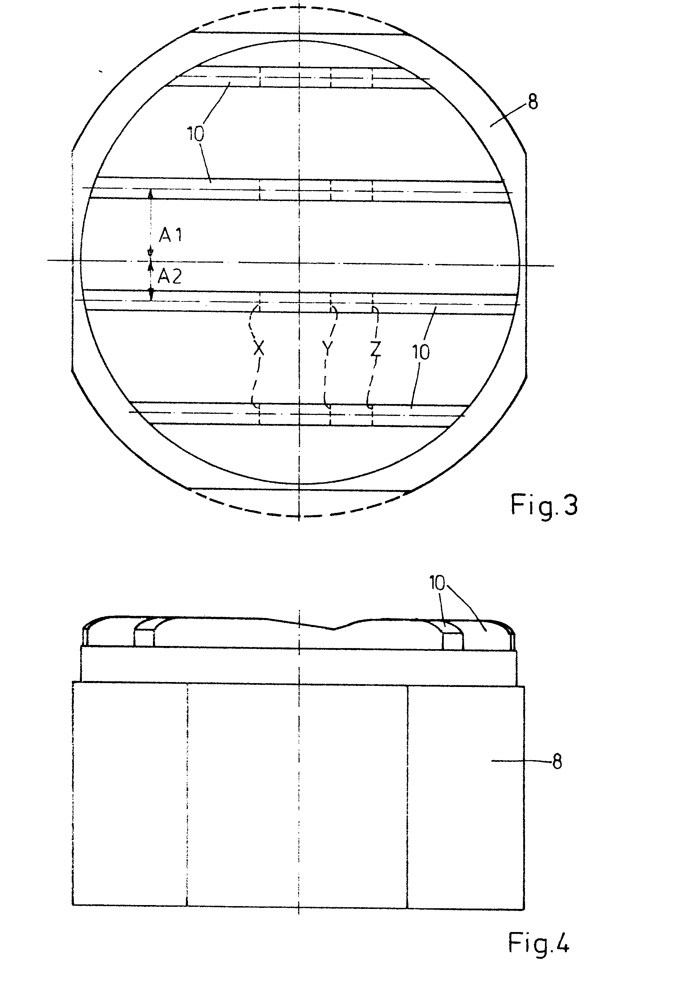

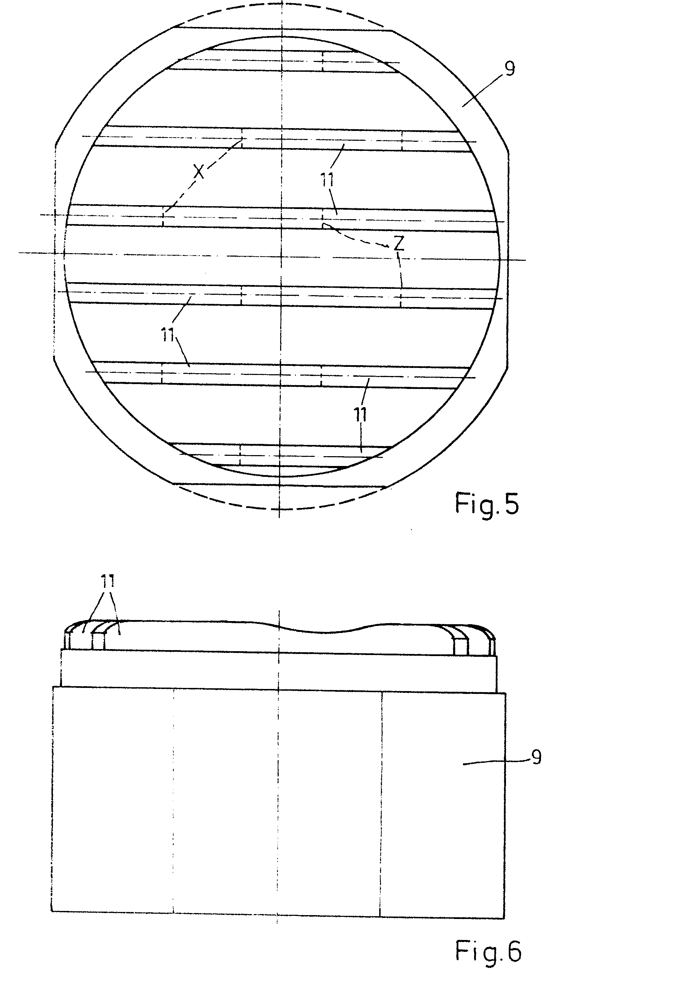

Die Herstellung eines Sitzgeflechtes aus Kunststoff erfolgt in einer aus zwei Hälften (Formplatten) 6 und 7 gebildeten Spritzgießform gemäß Fig. 2 und für die Herstellung der Geflechtstrangformen in den beiden Hälften 6 und 7 der Spritzgießform ist je nach Geflechtform mindestens eine oder zwei oder ggf. mehrere Elektroden 8/9 gemäß Fig. 3 bis 6 vorgesehen - durch elektroerosive Bearbeitung, und zwar durch Funkenerodieren, werden mittels der Elektroden 8,9 in den Spritzgießformhälften 6,7 die Geflechtstränge 1 bis 3 ausgearbeitet.

Für die längs- und querverlaufenden Geflechtstränge 1 und 2 ist eine einzige Elektrode 8 für beide Hälften (Oberteil und Unterteil) 6,7 der Spritzgießform vorgesehen. Diese Elektrode 8 weist entsprechend dem höhenmäßigen Kurvenverlauf gleichgerichteter Geflechtstränge 1 und 2 die Strangpositivform 1o, die der späteren Geflechtform des hergestellten Sitzgeflechtes entspricht, auf, das heißt, diese Elektrode 8 ist mit mehreren parallellaufenden, erhabenen Geflechtsträngen 1o ausgestattet, deren auf- und abgehender Verlauf, deren Breite und deren Länge tatsächlich der Form der später hergestellten Geflechtstränge 1,2 entspricht.

Für die diagonalverlaufenden Geflechtstränge 3 ist eine zweite Elektrode 9 vorgesehen, mit der ebenfalls beide Hälften 6 und 7 der Spritzgießform bearbeitet werden. Diese zweite Elektrode 9 hat entsprechend dem höhenmäßigen Kurvenverlauf der Diagonalstränge 3 eine Strangpositivform 11, die der späteren Geflechtform des hergestellten Sitzgeflechtes entspricht; diese Elektrode 9 ist somit mit mehreren erhabenen und parallellaufenden Geflechtsträngen 11 ausgestattet, die in ihrem auf- und abgehenden Höhenverlauf, in der Breite und in der Länge der tatsächlichen Form der später hergestellten Geflechtstränge 3 entsprechen.

Die Anzahl und der Abstand der Positivform-Geflechtstränge 1o,11 an den Elektroden 8,9 entspricht der herzustellenden Geflechtform und -größe.

Die Elektroden 8,9 haben beispielweise einen kreisförmigen Querschnitt, sind in Längsrichtung zylindrisch ausgebildet und mit Querschnittsabflachungen für die Einspannung in einen Werkzeughalter und -führer ausgestattet. An der Stirnseite jeder Elektrode 8,9 sind die Strangpositivformen 1o,11 vorgesehen.

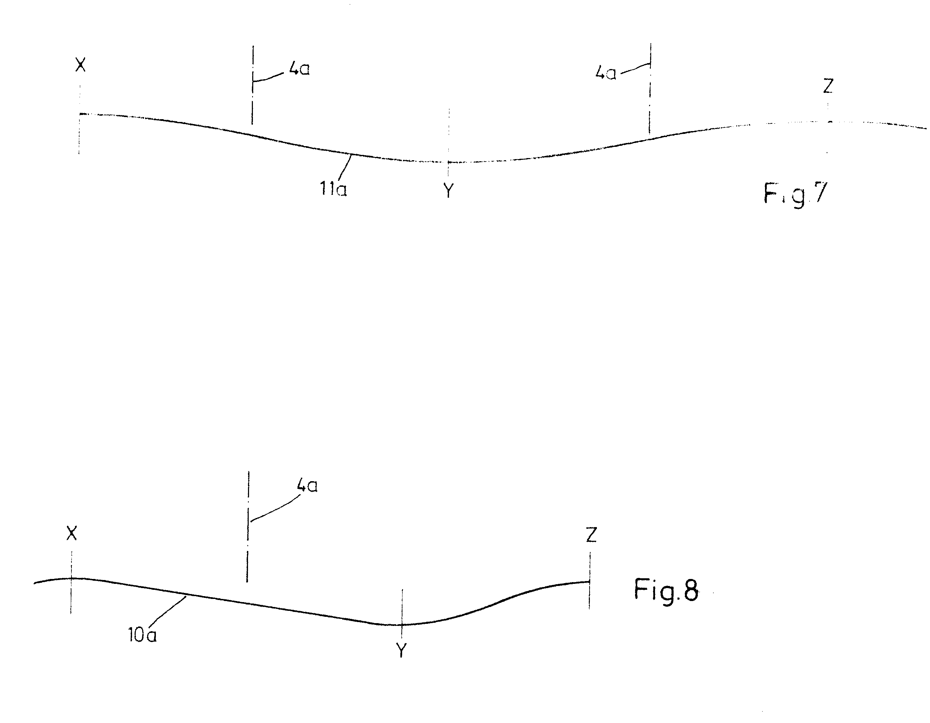

In Fig. 7 ist der Kurvenverlauf 11a eines Teilbereiches der Länge eines Diagonalstranges 3 von einem höchsten Punkt X über den tiefsten Punkt Y bis wieder zum höchsten Punkt Z dargestellt, der der natürlichen Geflechtskurve entspricht und der auf die Strangpositivform 11 genau übertragen ist. Zwischen dem höchsten und tiefsten Punkt X-Y bzw. Z-Y ist mit 4a jeweils die Lochmitte der im Geflecht entstehenden Löcher 4 zwischen den Strängen 1 bis 3 bezeichnet.

Fig. 8 zeigt den Kurvenverlauf 1Oa eines Teilbereiches der Länge eines Längs- bzw. Querstranges 1,2 von dem höchsten Punkt X über den tiefsten Punkt Y bis wieder zum höchsten Punkt Z, wie er der natürlichen Geflechtskurve entspricht und genau auf die Strangpositivform 1o übertragen ist, wobei wiederum 4a die Lochmitte der Löcher 4 im Geflecht zwischen X und Y angibt.

Mit den beiden Elektroden 8,9 werden in die beiden Hälften 6,7 der Spritzgießform durch Funkenerodieren die Strangnegativformen 12 eingearbeitet, das heißt, das Material zur Schaffung der Negativformen 12 herausgebrannt.

Dabei sind die beiden Negativformen 12 völlig gleich, so daß auch das spätere fertige Sitzgeflecht an seiner Ober- und Unterseite identisch ausgebildet ist und sowohl von oben als auch von unten einem natürlichen Geflecht entspricht.

Das Herstellen der Negativform 12 in einer Formhälfte 6, wobei die Herstellung der Negativform 12 in der zweiten Formhälfte 7 identisch durchgeführt wird, geschieht folgendermaßen:

Zuerst werden durch die Positivstränge 1o der Elektrode 8 die Längsstränge (1) in die Formhälfte 6 eingebrannt und anschließend wird die Elektrode 8 um ihre Längsachse um 9o° gedreht und dann die Querstränge (2) eingebrannt, so daß sich diese Stränge (1) und (2) in einem Winkel von 9o° überkreuzen. Dieses ist ein Einfachgeflecht. Soll nun ein Doppelgeflecht gebildet werden, wie in Fig. 1 dargestellt, dann wird die Elektrode 8 nochmals um 9o° gedreht, so daß zu den zuerst ausgebrannten Längssträngen (1) nochmals Längsstränge (1) eingebrannt werden, die parallel zu den ersten Längssträngen (1) verlaufen. Durch weiteres Drehen der Elektrode 8 um 9o° erfolgt dann ein Einbrennen der zweiten Querstränge (2), die ebenfalls parallel zu den ersten Längssträngen (1) verlaufen.

Dann ist eine Negativform 12 für die Herstellung eines Geflechtes mit doppelten Längs- und Quersträngen (1,2) geschaffen. Hierbei sind die Positivstränge 1o in der Elektrode 8 jedoch gegenüber der Mitte des Elektrodenquerschnittes in den Abständen A1 und A2 versetzt, wie in Fig. 3 dargestellt, so daß dadurch die Drehung der Elektrode 8 um insgesamt 36o° und dabei das Einbrennen von parallellaufenden Doppelsträngen (1,2) möglich ist.

Die Diagonalstränge 11 der Elektrode 9 sind ohne Mittenversatz parallel zueinander und mit gleichem Abstand angeordnet. Nunmehr kommt die Elektrode 9 zum Einsatz und mit ihren Positivsträngen 11 werden die Diagonalstränge (3) in die Formhälfte 6 eingebrannt. Damit auch die Diagonalstränge (3) sich überkreuzen, erfolgt das Einbrennen in zwei Schritten, in dem zuerst gemäß Fig. 1 die von oben links nach unten rechts schrägverlaufenden Stränge (3) und dann durch Drehen der Elektrode 9 um ebenfalls 9o° die zweiten von unten links nach oben rechts verlaufenden Diagonalstränge (3) eingebrannt werden.

Alle sich überkreuzenden Stränge (1 bis 3) bilden immer neben ihren Kreuzungsbereichen die Geflechtlöcher 4. Mit 13 ist in Fig. 2 ein sich an das Geflecht anschließender umlaufender Negativrand 13 durch Erodieren ausgearbeitet, der zur Herstellung des Sitzgeflechtrandes 5 dient.

Nunmehr kann zwischen den beiden geschlossenen Formhälften 6,7 das Sitzgeflecht mit Rand 5 einteilig aus Kunststoff gespritzt werden.

Das gespritzte Sitzteil kann in sich eben oder aber auch in sich gewölbt ausgebildet sein, wobei das ebene Sitzteil in der Spritzgießform nach Fig. 2 hergestellt wird und für ein gewölbtes Sitzteil die Elektroden 8,9 eine entsprechend gewölbte Stirnseite mit ebenfalls gewölbten Positivformen 1o,11 haben.

Es liegt im Rahmen der Erfindung, die Negativform 12 in den Formenhälften 6,7 auch durch Kopierfräsen zu erstellen, was jedoch nur eine Ausweichmöglichkeit für das Funkenerodieren oder in Verbindung mit demselben darstellt.

Patentansprüche

1. Verfahren zur Herstellung einer Spritzgießform für die Herstellung eines Sitzgeflechtes aus Kunststoff, dadurch gekennzeichnet, daß eine Elektrode (8,9) entsprechend dem höhenmäßigen Kurvenverlauf (1Oa,11a) gleichgerichteter Geflechtstränge (1,2,3) mit der Strangpositivform (10,11), die der späteren Geflechtform des hergestellten Sitzgeflechtes entspricht, versehen und dann mit dieser Elektrode (8,9) in beiden Hälften (6,7) der Spritzgießform durch Funkenerodieren die Geflechtstränge in Negativform (12) eingebracht werden.

2. Verfahren nach Anspruch 1, dadurch gekennzeichnet, daß für das überkreuzte Anordnen der Geflechtstränge (1,2,3) minde - stens zwei nacheinander erfolgende Erodiervorgänge vorgenommen werden, wobei die Elektrode (8,9) mindestens einmal um ihre senkrecht zur Geflechtebene stehende Achse um den Scheitelwinkel gedreht wird.

3. Verfahren nach Anspruch 1 und 2, dadurch gekennzeichnet, daß für ein Sitzgeflecht mit doppelten Längs- und Quersträngen (1,2) und einfach sich überkreuzenden Diagonalstängen (3) die Längs- und Querstrangelektrode (8) vier mal um je 9o° um ihre Längsachse und die Diagonalstrangelektrode (9) zwei mal um 9o° verdreht in die Formhälften (6,7) zum Funkenerodieren eingesetzt wird.

4. Verfahren nach Anspruch 1, dadurch gekennzeichnet, daß die Oberfläche der Strangpositivform (1o,11) der Elektrode(8,9) durch Funkenerodieren mit Aufrauhungen, vorzugsweise Riffelungen, versehen wird.

5. Elektrode zur Durchführung des Herstellungsverfahrens einer Spritzgießform nach den Ansprüchen 1 bis 4, dadurch gekennzeichnet, d a ß dieselbe an ihrer Stirnseite mit einer aus mehreren parallelverlaufenden und entsprechend dem höhenmäßigen Kurvenverlauf eines natürlichen Geflechtes erhabenen Geflechtsträngen gebildeten Positivform (1o,11) ausgestattet ist.

6. Elektrode nach Anspruch 5, dadurch gekennzeichnet, d a ß eine Elektrode (8) für die in Längs- und Querrichtung verlaufenden Geflechtsträge (1,2) mit gleichen prallelen Positivformsträngen (1o) ausgestattet ist, die für die Bildung doppelter Längs- und Quer-Geflechtsträge (1,2) mit Abstand (A1,A2) außerhalb der Mitte der Querschnittsstirnfläche der Elektrode (8) angeordnet sind (Fig. 3).

7. Elektrode nach Anspruch 5, dadurch gekennzeichnet, d a ß die Elektrode (9) für die Diagonal-Geflechtstränge (3) mit parallel zueinander verlaufenden, gleichen und mit gleichem Abstand zur Querschnittsmitte der Elektrodenstirnfläche angeordneten Positivformsträngen (11) ausgestattet ist (Fig. 5).

8. Elektrode nach den Ansprüchen 5 bis 7, dadurch gekennzeichnet, d a ß die Oberfläche der Positivformstränge (1o,11) Aufrauhungen, vorzugsweise Riffelungen, aufweisen.

9. Spritzgußwerkzeug hergestellt nach dem Verfahren und mit der Elektrode nach den Ansprüchen 1 bis 8, dadurch gekennzeichnet, d a ß in den beiden gehärteten Formhälften (6,7) die Negativform (12) im gleichen Geflechtstrangverlauf ausgearbeitet ist.

1o. Spritzgießwerkzeug nach Anspruch 9, dadurch gekennzeichnet, d a ß die Oberfläche der Negativform (12) Aufrauhungen, vorzugsweise Riffelungen hat.

11. Sitzgeflecht aus Kunststoff, hergestellt in der Spritzgießform nach Anspruch 9 und 1o, dadurch gekennzeichnet, d a ß dasselbe auf beiden Seiten eine einem natürlichen Geflecht entsprechend Geflechtausbildung hat.

12. Sitzgeflecht nach Anspruch 11, dadurch gekennzeichnet, d a ß dasselbe in sich eben ausgebildet ist.

13. Sitzgeflecht nach Anspruch 11, dadurch gekennzeichnet, d a ß dasselbe gewölbt ausgebildet ist.

14. Sitzgeflecht nach den Ansprüchen 11 bis 13, dadurch gekennzeichnet, d a ß dasselbe mit einem umlaufenden Rand (5) einteilig ausgebildet ist.

Fig. 1

Fig.2

0181958

Fig.3

Fig.4

Fig.5

Fig.6

X           4a             4a         Z

11a     Y         Fig 7

X          4a       Z

10a       Y      Fig.8

4/4

0181958

Europäisches
Patentamt

**EUROPÄISCHER RECHERCHENBERICHT**

0181958

Nummer der Anmeldung

EP 84 11 4039

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENTS ABSTRACTS OF JAPAN, Band 1, Nr. 216 (M-329)[1653], 3. Oktober 1984; & JP - A - 59 102 526 (CITIZEN TOKEI K.K.) 13.06.1984 | 1 | B 23 H 9/00 |
| | --- | | |
| A | FR-A-2 174 923 (WESTERN ELECTRIC) * Anspruch 1 * | 1,2 | |
| | ----- | | |

| | |
|---|---|
| | RECHERCHIERTE SACHGEBIETE (Int. Cl.4) |
| | B 23 H |

Der vorliegende Recherchenbericht wurde für alle Patentansprüche erstellt.

| Recherchenort | Abschlußdatum der Recherche | Prüfer |
|---|---|---|
| DEN HAAG | 12-06-1985 | DAILLOUX C. |